# EUROPÄISCHE PATENTSCHRIFT

(11) **EP 3 885 606 B1**
(45) Veröffentlichungstag und Bekanntmachung des Hinweises auf die Patenterteilung: **14.05.2025**
(21) Anmeldenummer: 21152655.3
(22) Anmeldetag: 21.01.2021
(51) Int. Cl.: F16G 1/10, F16F 9/00, F16G 1/28, G01B 7/00

(54) **SYSTEM ZUR DEHNUNGSERFASSUNG UND/ODER ZUSTANDSÜBERWACHUNG EINES FESTIGKEITSTRÄGERS EINES ELASTOMEREN PRODUKTS**
SYSTEM FOR DETERMINING THE STRAIN AND / OR MONITORING THE CONDITION OF A REINFORCEMENT OF AN ELASTOMERIC PRODUCT
SYSTÈME DE DÉTECTION DE DILATATION ET/OU DE SURVEILLANCE DE L'ÉTAT D'UN SUPPORT DE RENFORCEMENT D'UN PRODUIT ÉLASTOMÈRE

(30) Priorität: 24.03.2020 DE 102020203810
(43) Veröffentlichungstag der Anmeldung: 29.09.2021
(73) Patentinhaber: ContiTech Deutschland GmbH, 30175 Hannover (DE)
(72) Erfinder: Sipilä, Pekka, 30419 Hannover (DE); Rosenbohm, Svenja, 30419 Hannover (DE); Fiss, Tim, 30419 Hannover (DE)
(74) Vertreter: Continental Corporation

(56) Entgegenhaltungen:
- WO-A1-2009/024452

## Beschreibung

Die vorliegende Erfindung betrifft ein System zur Dehnungserfassung und bzw. oder Zustandsüberwachung eines Festigkeitsträgers eines elastomeren Produkts gemäß der Patentansprüche 1, 3 und 7, ein elastomeres Produkt zur Verwendung in einem derartigen System gemäß des Patentanspruchs 15, einen elektromagnetisch-akustischen (Ultra- )Wandler zur Verwendung in einem derartigen System gemäß des Patentanspruchs 16, einen elektromagnetisch-akustischen (Ultra-)Erzeuger zur Verwendung in einem derartigen System gemäß des Patentanspruchs 17 sowie einen elektromagnetisch-akustischen (Ultra- )Empfänger zur Verwendung in einem derartigen System gemäß des Patentanspruchs 18.

Es sind zahlreiche technische Anwendungen bekannt, bei denen elastomere Produkte genutzt werden. Derartige Produkte können aus einem Elastomermaterial oder auch aus mehreren Elastomermaterialien bestehen bzw. ein Elastomermaterial oder auch mehrere Elastomermaterialien aufweisen. Unter einem Elastomermaterial bzw. unter einem elastomeren Material ist ein Elastomer als formfester, aber elastisch verformbarer Kunststoff zu verstehen, dessen Glasübergangspunkt sich unterhalb der Einsatztemperatur befindet. Insbesondere kann ein Elastomer ein Vulkanisat von Naturkautschuk oder von Silikonkautschuk sein und auch als Gummi bezeichnet werden. Beispielsweise können derartige elastomere Produkte Schläuche, Riemen und insbesondere Antriebsriemen, Bänder und insbesondere Förderbänder bzw. Gurte und insbesondere Fördergurte, Luftfedern, Fahrzeugreifen und dergleichen sein.

Bei vielen technischen Anwendungen werden in dem Elastomermaterial sog. Festigkeitsträger eingebettet, welche z.B. der Kraftübertragung in wenigstens einer Erstreckungsrichtung der Festigkeitsträger dienen können. Als Festigkeitsträger können z.B. bei Fördergurten Stahlseile verwendet werden, welche sich in der endlos geschlossenen Längsrichtung, Laufrichtung bzw. Förderrichtung erstrecken. Alternativ zu Stahlseilen können auch Glasfasern oder Aramidfasern z.B. bei Antriebsriemen verwendet werden. Insgesamt können alternativ auch flächige Textilien wie insbesondere Textilgewebe z.B. bei Fördergurten aber auch bei z.B. Antriebsriemen, Schläuchen und Luftfedern als Festigkeitsträger verwendet werden, um insbesondere Kräfte in mehr als einer Vorzugsrichtung übertragen zu können. In jedem Fall kann dem elastomeren Produkt durch die Einbettung von Festigkeitsträgern in das Elastomermaterial eine verbesserte Festigkeit gegeben werden, so dass höhere bzw. überhaupt Zugkräfte übertragen werden können. Dies kann gewisse Anwendungen überhaupt erst ermöglichen und bzw. oder die Langlebigkeit des elastomeren Produkts erhöhen.

Im Laufe der Verwendung eines derartigen elastomeren Produkts kann es zu Ermüdungen der Festigkeitsträger kommen, welche schließlich zu einem Zerreißen der Festigkeitsträger führen können. Dies führt üblicherweise auch zu einem Zerreißen des Elastomermaterials des elastomeren Produkts an dieser Stelle, woraus üblicherweise ein Ausfall des elastomeren Produkts resultiert.

Die Ermüdung der Festigkeitsträger tritt dabei üblicherweise nicht plötzlich auf, sondern entwickelt und verstärkt sich über eine gewisse Zeitspanne, während der sich die Festigkeitsträger zunehmend dehnen, bis wenigstens ein Festigkeitsträger schließlich reißt. Entsprechend können eine zunehmende Ermüdung und ein hieraus resultierendes drohendes Zerreißen der Festigkeitsträger eines elastomeren Produkts aufgrund der damit einhergehenden Dehnung des elastomeren Produkts in der Richtung der Kraftübertragung der Festigkeitsträger erkannt werden.

Um die Dehnung von Produkten allgemein zu erkennen, welche einer Krafteinwirkung in zumindest einer Richtung ausgesetzt sind, ist es z.B. bekannt, die akustische Entfernung, d.h. die Laufzeit eines Signals, zwischen zwei Messpunkten entlang der Richtung der Krafteinwirkung messtechnisch zu erfassen. Hierzu kann z.B. Ultraschall eingesetzt werden, indem an einer ersten Stelle des Produkts ein Ultraschallsignal erzeugt und an einer zweiten Stelle sensorisch erfasst wird. Üblicherweise werden zur Erzeugung von Ultraschallsignalen Piezokristalle verwendet, welche durch direkten oder indirekten Kontakt mit der Oberfläche des Produkts dort Schallwellen einkoppeln, welche sich zumindest auch durch das Produkt in der Richtung der Krafteinwirkung zum Sensor hin ausbreiten, wo sie ebenfalls mittels eines Piezokristalls erfasst werden können. Ist der Abstand zwischen den beiden Stellen von Ultraschallerzeuger und Ultraschallsensor hinreichend genau bekannt, kann durch wiederholte Messung durch eine Erhöhung der Signallaufzeit eine Dehnung in dieser Richtung messtechnisch erkannt werden.

Nachteilig ist hierbei, dass derartige Verfahren üblicherweise bei rein metallischen Körpern angewendet werden, welche ausreichend starr sind, um die Ausbreitung der Ultraschallwellen zu ermöglichen. Aufgrund seiner vergleichsweise hohen Elastizität, welche zu einer vergleichsweise hohen Absorption von Schallwellen, insbesondere bei hohen Frequenzen, allgemein führt, können derartige Verfahren jedoch nicht auf elastomere Produkte angewendet werden.

Nachteilig ist ferner, dass zur Übertragung der Ultraschallwellen von dem Ultraschallerzeuger in das Produkt hinein sowie der Ultraschallwellen zum Ultraschallsensor aus dem Produkt heraus jeweils ein berührender Kontakt erforderlich ist. Dieser berührende Kontakt kann direkt zwischen der Oberfläche des Produkts und dem Ultraschallerzeuger bzw. dem Ultraschallsensor erfolgen. Alternativ kann auch ein Koppelmittel wie z.B. Wasser, Öl, Gel oder dergleichen zwischen der Oberfläche des Produkts und dem Ultraschallerzeuger bzw. dem Ultraschallsensor vorgesehen werden. In jedem Fall verhindert diese Anforderung den Einsatz dieses Messverfahrens im Betrieb bei sich bewegenden Produkten wie z.B. Antriebsriemen, Förderbänder, Luftfedern und dergleichen.

Alternativ sind optische Verfahren bekannt, um die Dehnung von Produkten allgemein in zumindest einer Richtung einer Krafteinwirkung messtechnisch zu erfassen. Hierzu können z.B. Referenzmarkierungen z.B. in Form von Streifen an wenigstens zwei Stellen entlang der Richtung der Krafteinwirkung außen auf dem Produkt aufgebracht werden, welche dann z.B. mittels einer Bildverarbeitungseinheit wie z.B. mittels einer Kamera optisch erfasst werden können. Ist der Abstand zwischen den beiden Referenzmarkierungen hinreichend genau bekannt, kann durch wiederholte Messung durch eine Erhöhung des Abstands eine Dehnung in dieser Richtung erfasst werden.

Nachteilig hierbei ist, dass derartige optische Verfahren durch Umwelteinflüsse wie z.B. Schmutz, Öl, Feuchtigkeit, Staub, Rauch und dergleichen ausreichend beeinträchtigt werden können, um zumindest eine der Referenzmarkierungen unzureichend oder sogar gar nicht mehr erkennen zu können. Dies kann die Ermittlung des Abstands verhindern. Auch können die Referenzmarkierungen lediglich dort an dem Produkt angeordnet werden, wo sie auch optisch erfasst werden können. Dies kann die Auswahl von geeigneten Stellen für die Referenzmarkierungen einschränken.

Es besteht auch die Möglichkeit, die Dehnung von Produkten allgemein in zumindest einer Richtung einer Krafteinwirkung messtechnisch mittels sog. Dehnungsmesstreifen zu erfassen, welche auf dem Produkt in der Richtung der Krafteinwirkung dauerhaft aufgebracht sein können. Die Erstreckung der Dehnungsmesstreifen in der Richtung der Krafteinwirkung ist jedoch aufgrund des Messprinzips vergleichsweise gering, so dass dieses Verfahren zumindest nicht für sich besonders lang erstreckende Produkte wie z.B. Antriebsriemen, Fördergurte, Schläuche und dergleichen sinnvoll angewendet werden kann. Insbesondere lassen sich aus lokal erfassten Dehnungen mittels Dehnungsmessstreifen keine repräsentativen Schlussfolgerungen für größere Längen ziehen. Mit anderen Worten lassen sich mittels Dehnungsmesstreifen eher lokale Dehnungen in geringem Umfang erfassen.

Eine Aufgabe der vorliegenden Erfindung ist es, ein System zur Dehnungserfassung und bzw. oder Zustandsüberwachung eines Festigkeitsträgers eines elastomeren Produkts der eingangs beschriebenen Art bereit zu stellen, so dass die Dehnung und bzw. oder der Zustand wenigstens eines Festigkeitsträgers einfacher, verlässlicher, kompakter, robuster und bzw. oder kostengünstiger als bisher bekannt messtechnisch erfasst und bzw. oder überwacht werden kann. Zumindest soll eine Alternative zu den bisher bekannten Möglichkeiten geschaffen werden.

Die Aufgabe wird erfindungsgemäß durch ein System mit den Merkmalen gemäß Patentanspruch 1, durch ein System mit den Merkmalen gemäß Patentanspruch 3 und durch ein System mit den Merkmalen gemäß Patentanspruch 7 gelöst. Vorteilhafte Weiterbildungen sind in den Unteransprüchen beschrieben.

Somit betrifft die vorliegende Erfindung ein System zur Dehnungserfassung und bzw. oder Zustandsüberwachung eines Festigkeitsträgers eines elastomeren Produkts, welches insbesondere ein Antriebsriemen, ein Aufzugsriemen, ein Fördergurt, ein Fahrzeugreifen, eine Luftfeder oder ein Schlauch sein kann. Das System weist das elastomere Produkt mit einem Produktkörper auf, welcher insbesondere ein Riemenkörper, ein Gurtkörper, ein Reifenkörper, ein Faltenbalg oder eine Schlauchwand sein kann und zumindest im Wesentlichen ein elastomeres Material wie z.B. Gummi, d.h. ein Vulkanisat von Natur- und bzw. oder Synthesekautschuk, aufweist. Der Produktkörper weist zumindest abschnittsweise wenigstens einen magnetostriktiven Körper, vorzugsweise einen ferromagnetischen Körper, auf. Der magnetostriktive Körper kann z.B. als rein metallischer Körper oder auch als Elastomerkörper umgesetzt werden, wie weiter unten noch beschrieben werden wird. Der magnetostriktive Körper kann vormagnetisiert sein. Der Produktkörper weist zumindest abschnittsweise wenigstens einen Festigkeitsträger auf, welcher in den Produktkörper eingebettet ist.

Das System weist auch einen elektromagnetisch-akustischen (Ultra-)Wandler auf, welcher zum elastomeren Produkt beabstandet und ausreichend nah zum magnetostriktiven Körper des Produktkörpers angeordnet sowie ausgebildet ist, mittels eines elektromagnetischen Wechselfelds den magnetostriktiven Körper zum Aussenden wenigstens einer ersten ausgehenden Schallwelle, vorzugsweise wenigstens einer ersten ausgehenden Ultraschallwelle, anzuregen und wenigstens eine erste an dem magnetostriktiven Körper eingehende Schallwelle, vorzugsweise eine erste an dem magnetostriktiven Körper eingehende Ultraschallwelle, invers-magnetostriktiv zu erfassen, wobei der Festigkeitsträger zumindest abschnittweise ausreichend nah zum magnetostriktiven Körper angeordnet ist, um die erste ausgehende Schallwelle vom magnetostriktiven Körper zu empfangen und als erste eingehende Schallwelle zum magnetostriktiven Körper zurückzusenden.

Mit anderen Worten ist das erfindungsgemäße System dazu ausgebildet, mittels des elektromagnetisch-akustischen (Ultra-)Wandlers mittels eines elektromagnetischen Wechselfelds berührungslos Schallwellen im magnetostriktiven Körper des Produktkörpers zu erzeugen und sich diese auf dem Festigkeitsträger ausbreiten zu lassen. Genauer gesagt wird eine Induktionsspule des elektromagnetisch-akustischen (Ultra-)Wandlers mit einem Wechselstrom betrieben. Hierdurch wird ein magnetisches Wechselfeld im Spulenkern des elektromagnetisch-akustischen (Ultra-)Wandlers hervorgerufen, welches sich über den magnetostriktiven Körper des Produktkörpers schließt. Entsprechend werden die Dipole des magnetostriktiven Körpers abwechselnd in entgegengesetzte Richtungen ausgerichtet, woraus sich eine Längenänderung des magnetostriktiven Körpers ergibt, aus welcher Schallwellen resultieren.

Diese Schallwellen breiten sich von dem magnetostriktiven Körper ausgehend sowohl in das elastomere Material des Produktkörpers als auch in den Festigkeitsträger aus. Im elastomeren Material werden die Schallwellen stark gedämpft, so dass dort keine wirksame Ausbreitung stattfindet. Im relativ festen Material des Festigkeitsträgers jedoch können sich die Schallwellen wirksam ausbreiten, was entlang der Erstreckungsrichtung des Festigkeitsträgers geschieht.

Entsprechend können die ausgehenden Schallwellen wieder den magnetostriktiven Körper erreichen und eine Längenänderung des magnetostriktiven Körpers bewirken, welche die magnetischen Eigenschaften des magnetostriktiven Körpers verändern kann. Dies kann die magnetische Kopplung zwischen dem magnetostriktiven Körper und dem Spulenkern des elektromagnetisch-akustischen (Ultra-)Wandlers beeinflussen, was als Messstrom vom elektromagnetisch-akustischen (Ultra-)Wandler erfasst werden kann.

Erfindungsgemäß ist es somit möglich, durch Verwendung eines elektromagnetisch-akustischen (Ultra-)Wandlers in Kombination mit wenigstens einem magnetostriktiven Körper, welcher Schallwellen auf den Festigkeitsträger übertragen sowie von diesem erhalten kann, messtechnische Untersuchungen des Festigkeitsträgers durchzuführen. So können z.B. aus der Laufzeit der Schallwellen entlang des Festigkeitsträgers Rückschlüsse auf die Dehnung des Festigkeitsträgers und zumindest auf eine Veränderung der Dehnung des Festigkeitsträgers gezogen werden, wie weiter unten noch näher beschrieben werden wird.

Alternativ oder zusätzlich kann auch aus den eintreffenden Schallwellen Rückschlüsse auf den Zustand des Festigkeitsträgers gezogen werden, wie weiter unten noch näher beschrieben werden wird. Bleibt nämlich die eintreffende Schallwelle aus, so kann auf einen unterbrochenen Festigkeitsträger geschlossen werden. Ggfs. können aus den Reflektionen, welche von der Stelle des Risses bzw. Bruches des Festigkeitsträgers erzeugt werden können, Rückschlüsse auf die Unterbrechung des Festigkeitsträgers gezogen werden.

Gemäß einem Aspekt der Erfindung ist der elektromagnetisch-akustischen (Ultra-)Wandler als stationäre Einrichtung oder als mobile Einrichtung ausgeführt. Als stationäre Einrichtung kann eine dauerhafte und insbesondere selbsttätige Umsetzung der Aspekte der Erfindung an dem elastomeren Produkt erfolgen. Als mobile Einrichtung kann dies bei Bedarf, insbesondere seitens einer Person, erfolgen, was die Kosten der Umsetzung der Erfindung reduzieren kann, da eine mobile Einrichtung flexibel bei mehreren elastomeren Produkten eingesetzt werden kann.

Die vorliegende Erfindung betrifft auch ein System zur Dehnungserfassung und bzw. oder Zustandsüberwachung eines Festigkeitsträgers eines elastomeren Produkts mit dem elastomeren Produkt mit einem Produktkörper, welcher zumindest im Wesentlichen ein elastomeres Material aufweist, wobei der Produktkörper zumindest abschnittsweise wenigstens einen magnetostriktiven Körper, vorzugsweise einen ferromagnetischen Körper, aufweist, und wobei der Produktkörper zumindest abschnittsweise wenigstens einen Festigkeitsträger aufweist, welcher in den Produktkörper eingebettet ist, mit einem elektromagnetisch-akustischen (Ultra-)Erzeuger, welcher zum elastomeren Produkt beabstandet und ausreichend nah zum magnetostriktiven Körper des Produktkörpers angeordnet sowie ausgebildet ist, mittels eines elektromagnetischen Wechselfelds den magnetostriktiven Körper zum Aussenden wenigstens einer ersten ausgehenden Schallwelle, vorzugsweise wenigstens einer ersten ausgehenden Ultraschallwelle, anzuregen, und mit einem elektromagnetisch-akustischen (Ultra-)Empfänger, welcher zum elastomeren Produkt beabstandet und ausreichend nah zum magnetostriktiven Körper des Produktkörpers angeordnet sowie ausgebildet ist, wenigstens eine erste an dem magnetostriktiven Körper eingehende Schallwelle, vorzugsweise eine erste an dem magnetostriktiven Körper eingehende Ultraschallwelle, invers-magnetostriktiv zu erfassen, wobei der Festigkeitsträger zumindest abschnittweise ausreichend nah zum magnetostriktiven Körper angeordnet ist, um die erste ausgehende Schallwelle vom magnetostriktiven Körper zu empfangen und als erste eingehende Schallwelle zum magnetostriktiven Elastomerkörper zurückzusenden.

Mit anderen Worten unterscheidet sich dieses erfindungsgemäße System von dem zuvor beschriebenen erfindungsgemäßen System dadurch, dass zuvor sowohl die Funktionen des Erzeugens eines elektromagnetischen Wechselfelds sowie das Einkoppeln des elektromagnetischen Wechselfelds in den magnetostriktiven Körper des elastomeren Produkts als auch die Funktion des Erfassens bzw. des Empfangens der Veränderung der magnetischen Kopplung des magnetostriktiven Körpers des elastomeren Produkts gemeinsam und zeitlich versetzt zueinander von dem elektromagnetisch-akustischen (Ultra-)Wandler ausgeführt wurden. Im Gegensatz hierzu sind diese beiden Funktionen bei dem vorliegenden erfindungsgemäßen System auf den elektromagnetisch-akustischen (Ultra-)Erzeuger und auf den elektromagnetisch-akustischen (Ultra-)Empfänger aufgeteilt. Dies kann ggfs. den Aufwand erhöhen, jedoch dafür die Anwendungsmöglichkeiten erweitern.

Gemäß einem Aspekt der Erfindung steht der magnetostriktive Körper zumindest abschnittsweise in berührendem Kontakt mit dem Festigkeitsträger, vorzugsweise umgibt der magnetostriktive Körper den Festigkeitsträger zumindest abschnittsweise, vorzugsweise senkrecht zu einer länglichen Erstreckungsrichtung des Festigkeitsträgers vollständig, berührend. Dies kann jeweils den Übergang von Schallwellen zwischen dem magnetostriktive Körper und dem Festigkeitsträger in beiden Richtungen begünstigen.

Gemäß einem weiteren Aspekt der Erfindung ist der magnetostriktive Körper ein magnetostriktiver Elastomerkörper. Hierzu können beispielsweise metallische Materialien in das elastomere Material des Elastomerkörpers in einem ausreichend hohen Maße eingemischt werden, um die zuvor beschriebenen Aspekte der Erfindung umsetzen zu können. Gleichzeitig kann der magnetostriktiver Elastomerkörper eine vergleichbare Elastizität wie das elastomere Material des Produktkörpers aufweisen, um dessen Eigenschaften und insbesondere dessen Elastizität möglichst wenig bis gar nicht zu verändern.

Gemäß einem weiteren Aspekt der Erfindung ist der Produktkörper zumindest abschnittsweise, vorzugsweise vollständig, als magnetostriktiver Elastomerkörper ausgebildet. Dies kann zu einer besonders hohen Flexibilität der Umsetzung der Erfindung führen, da der elektromagnetisch-akustischen (Ultra-)Wandler bzw. der elektromagnetisch-akustischen (Ultra-)Erzeuger und der elektromagnetisch-akustischen (Ultra-)Empfänger an jeder beliebigen Position entlang des Produktkörpers angeordnet und hierdurch die Schallwellen im Festigkeitsträger erzeugt werden können. Auch kann hierdurch sichergestellt werden, dass die Materialeigenschaften des elastomeren Produkts nicht durch einen magnetostriktiven Körper als zusätzliches Element verändert werden.

Die vorliegende Erfindung betrifft auch ein System zur Dehnungserfassung und bzw. oder Zustandsüberwachung eines Festigkeitsträgers eines elastomeren Produkts mit dem elastomeren Produkt mit einem Produktkörper, welcher zumindest im Wesentlichen ein elastomeres Material aufweist, wobei der Produktkörper wenigstens einen ersten magnetostriktiven Körper, vorzugsweise einen ersten ferromagnetischen Körper, und hierzu beabstandet wenigstens einen zweiten magnetostriktiven Körper, vorzugsweise einen zweiten ferromagnetischen Körper, aufweist, und wobei der Produktkörper zumindest abschnittsweise wenigstens einen Festigkeitsträger aufweist, welcher in den Produktkörper eingebettet ist, mit einem elektromagnetisch-akustischen (Ultra-)Erzeuger, welcher zum elastomeren Produkt beabstandet und ausreichend nah zum ersten magnetostriktiven Körper des Produktkörpers angeordnet sowie ausgebildet ist, mittels eines elektromagnetischen Wechselfelds den ersten magnetostriktiven Körper zum Aussenden wenigstens einer ersten ausgehenden Schallwelle, vorzugsweise wenigstens einer ersten ausgehenden Ultraschallwelle, anzuregen, und mit einem elektromagnetisch-akustischen (Ultra-)Empfänger, welcher zum elastomeren Produkt beabstandet und ausreichend nah zum zweiten magnetostriktiven Körper des Produktkörpers angeordnet sowie ausgebildet ist, wenigstens eine erste an dem magnetostriktiven zweiten Körper eingehende Schallwelle, vorzugsweise eine erste an dem zweiten magnetostriktiven Körper eingehende Ultraschallwelle, invers-magnetostriktiv zu erfassen, wobei der Festigkeitsträger zumindest abschnittweise ausreichend nah zum ersten magnetostriktiven Körper und zum zweiten magnetostriktiven Körper angeordnet ist, um die erste ausgehende Schallwelle vom ersten magnetostriktiven Körper zu empfangen und als erste eingehende Schallwelle zum zweiten magnetostriktiven Körper zu senden.

Mit anderen unterscheidet sich dieses erfindungsgemäße System von den beiden zuvor beschriebenen erfindungsgemäßen Systemen dadurch, dass zuvor ein magnetostriktiver Körper verwendet wurde und nun zwei räumlich getrennt angeordnete magnetostriktive Körper verwendet werden. Dies kann ggfs. den Aufwand erhöhen, jedoch dafür die Anwendungsmöglichkeiten erweitern.

Gemäß einem Aspekt der Erfindung ist bzw. sind der elektromagnetisch-akustische (Ultra-)Erzeuger und bzw. oder der elektromagnetisch-akustische (Ultra-)Empfänger als stationäre Einrichtung oder als mobile Einrichtung ausgeführt. Dies kann die Umsetzung derselben Eigenschaften und Vorteile ermöglichen wie zuvor hinsichtlich des elektromagnetisch-akustische (Ultra-)Wandlers beschrieben.

Gemäß einem weiteren Aspekt der Erfindung stehen der erste magnetostriktive Körper und der zweite magnetostriktive Körper jeweils zumindest abschnittsweise in berührendem Kontakt mit dem Festigkeitsträger, vorzugsweise umgeben der erste magnetostriktive Körper und der zweite magnetostriktive Körper den Festigkeitsträger jeweils zumindest abschnittsweise, vorzugsweise senkrecht zu einer länglichen Erstreckungsrichtung des Festigkeitsträgers vollständig, berührend. Dies kann die Umsetzung derselben Eigenschaften und Vorteile ermöglichen wie zuvor hinsichtlich des einen magnetostriktiven Körpers beschrieben.

Gemäß einem weiteren Aspekt der Erfindung ist der erste magnetostriktive Körper ein erster magnetostriktiver Elastomerkörper und bzw. oder ist der zweite magnetostriktive Körper ein zweiter magnetostriktiver Elastomerkörper. Dies kann die Umsetzung derselben Eigenschaften und Vorteile ermöglichen wie zuvor hinsichtlich des einen magnetostriktiver Körpers beschrieben.

Gemäß einem weiteren Aspekt der Erfindung ist der Festigkeitsträger sich länglich erstreckend, vorzugsweise als Seil, als Faser oder als Cord, ausgebildet. Dies kann die Umsetzung der Erfindung insbesondere bei derartigen Festigkeitsträgern ermöglichen.

Gemäß einem weiteren Aspekt der Erfindung sind der elektromagnetisch-akustische (Ultra-)Erzeuger und der elektromagnetisch-akustische (Ultra-)Empfänger entlang der länglichen Erstreckungsrichtung des Festigkeitsträgers zueinander beabstandet angeordnet. Dies kann die Dehnungserfassung und bzw. oder die Zustandsüberwachung des Festigkeitsträgers insbesondere entlang seiner länglichen Erstreckungsrichtung begünstigen.

Gemäß einem weiteren Aspekt der Erfindung ist das System, vorzugsweise eine Steuerungseinheit des Systems, dazu ausgebildet, basierend wenigstens auf einer Veränderung der Laufzeit zwischen dem Aussenden der ersten ausgehenden Schallwelle und dem Erfassen der ersten eingehenden Schallwelle eine Dehnung des Festigkeitsträgers zu erkennen und bzw. oder zu bestimmen. Dies kann eine Möglichkeit darstellen, das Auftreten einer Dehnung des Festigkeitsträgers zumindest zu erkennen, z.B. indem die Laufzeiten regelmäßig erfasst und miteinander und bzw. oder mit einem Referenzwert verglichen werden, so dass ein Anstieg erkannt und als ausreichend hoch gewertet werden kann, um hieraus auf eine Dehnung des Festigkeitsträgers zu schließen, welche z.B. ein tolerierbares Maß überschreitet. Insbesondere kann aus der Laufzeit bzw. aus der Veränderung der Laufzeit auch das Maß der Dehnung bestimmt werden. In jedem Fall kann eine auffällig hohe Dehnung des Festigkeitsträgers selbsttätig oder für einen Benutzer des Systems Anlass geben, den Betrieb des elastomeren Produkts zu unterbrechen oder zu beenden, um ein weiteres Fortschreiten der Dehnung des Festigkeitsträgers und ggfs. ein Versagen des elastomeren Produkts zu vermeiden.

Gemäß einem weiteren Aspekt der Erfindung ist das System, vorzugsweise eine Steuerungseinheit des Systems, dazu ausgebildet, basierend wenigstens auf der ersten eingehenden Schallwelle den Zustand des Festigkeitsträgers zu bestimmen. Hierdurch kann eine Möglichkeit geschaffen werden, auf den Zustand des Festigkeitsträgers zu schließen, indem die eintreffende Schallwelle an sich oder in Relation zu der ausgehenden Schallwelle betrachtet wird. Beispielsweise kann aus einer Veränderung der Amplitude von ausgehender und eingehender Schallwelle auf den Zustand des Festigkeitsträgers geschlossen werden.

Insbesondere kann aus einer ausbleibenden eingehenden Schallwelle und bzw. oder aus einer unerwarteten Reflektion der ersten ausgehenden Schallwelle auf eine Unterbrechung des Festigkeitsträgers geschlossen werden. Beispielsweise kann eine eingehende hochgedämpfte Schallwelle aufgrund ihrer hohen Dämpfung als Reflektion der ersten ausgehenden Schallwelle erkannt und hierdurch auf einen unterbrochenen Festigkeitsträger geschlossen werden. Ggfs. kann aus der Laufzeit der eingehenden hochgedämpften Schallwelle relativ zur ersten ausgehenden Schallwelle auf den Ort des Bruches bzw. Risses des Festigkeitsträgers geschlossen werden. Dies kann selbsttätig oder für einen Benutzer des Systems Anlass geben, den Betrieb des elastomeren Produkts zu unterbrechen oder zu beenden, um ein Versagen des elastomeren Produkts zu vermeiden.

Vorteilhaft kann es für die Erfassung der Dehnung und bzw. oder für die Überwachung des Zustands der Festigkeitsträger sein, die Temperatur des Festigkeitsträgers und bzw. oder des Materials des Produktkörpers des elastomeren Produkts messtechnisch zu erfassen und zu berücksichtigen. Dies kann die Genauigkeit der Erfassung der Dehnung und bzw. oder der Überwachung des Zustands der Festigkeitsträger erhöhen. Dies kann mittels bekannter Temperatursensoren erfolgen.

In jedem Fall können Vorteile der Erfindung darin gesehen werden, dass ein System zur Dehnungserfassung und bzw. oder zur Zustandsüberwachung eines Festigkeitsträgers eines elastomeren Produkts geschaffen werden kann, welches berührungslos arbeiten kann. Auch kann das System mit vergleichsweise geringem Aufwand seitens des elastomeren Produkts umgesetzt werden. Insgesamt kann ein derartiges System mit hoher Verlässlichkeit und bzw. Robustheit gegenüber äußeren Einflüssen und bzw. oder zu vergleichsweise geringen Kosten realisiert werden. Dies gilt entsprechend für die Lebensdauer des Systems und insbesondere des elastomeren Produkts.

Die Erfindung betrifft auch ein elastomeres Produkt zur Verwendung in einem System wie zuvor beschrieben. Hierdurch kann ein elastomeres Produkt zur Verfügung gestellt werden, um ein erfindungsgemäßes System umzusetzen und dessen Eigenschaften und Vorteile nutzen zu können.

Die Erfindung betrifft auch einen elektromagnetisch-akustischen (Ultra-)Wandler zur Verwendung in einem System wie zuvor beschrieben. Hierdurch kann ein elektromagnetisch-akustischer (Ultra-)Wandler zur Verfügung gestellt werden, um ein erfindungsgemäßes System umzusetzen und dessen Eigenschaften und Vorteile nutzen zu können.

Die Erfindung betrifft auch einen elektromagnetisch-akustischen (Ultra-)Erzeuger zur Verwendung in einem System wie zuvor beschrieben. Hierdurch kann ein elektromagnetisch-akustischer (Ultra-)Erzeuger zur Verfügung gestellt werden, um ein erfindungsgemäßes System umzusetzen und dessen Eigenschaften und Vorteile nutzen zu können.

Die Erfindung betrifft auch einen elektromagnetisch-akustischen (Ultra-)Empfänger zur Verwendung in einem System wie zuvor beschrieben. Hierdurch kann ein elektromagnetisch-akustischer (Ultra-)Empfänger zur Verfügung gestellt werden, um ein erfindungsgemäßes System umzusetzen und dessen Eigenschaften und Vorteile nutzen zu können. Mehrere Ausführungsbeispiele und weitere Vorteile der Erfindung werden nachstehend im Zusammenhang mit den folgenden Figuren erläutert. Darin zeigt:
- Fig. 1: einen schematischen Querschnitt durch einen Ausschnitt eines erfindungsgemäßen Systems gemäß eines ersten Ausführungsbeispiels beim Aussenden einer ersten ausgehenden Schallwelle;
- Fig. 2: die Darstellung der Fig. 1 beim Empfangen einer ersten eingehenden Schallwelle;
- Fig. 3: eine schematische Darstellung des vollständigen erfindungsgemäßen Systems gemäß des ersten Ausführungsbeispiels;
- Fig. 4: eine schematische Darstellung eines erfindungsgemäßen Systems gemäß eines zweiten Ausführungsbeispiels;
- Fig. 5: eine schematische Darstellung eines erfindungsgemäßen Systems gemäß eines dritten Ausführungsbeispiels;
- Fig. 6: eine schematische Darstellung eines erfindungsgemäßen Systems gemäß eines vierten Ausführungsbeispiels;
- Fig. 7: einen schematischen Querschnitt durch einen Ausschnitt eines erfindungsgemäßen Systems gemäß eines fünften Ausführungsbeispiels; und
- Fig. 8: einen schematischen Querschnitt durch einen Ausschnitt eines erfindungsgemäßen Systems gemäß eines sechsten Ausführungsbeispiels.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

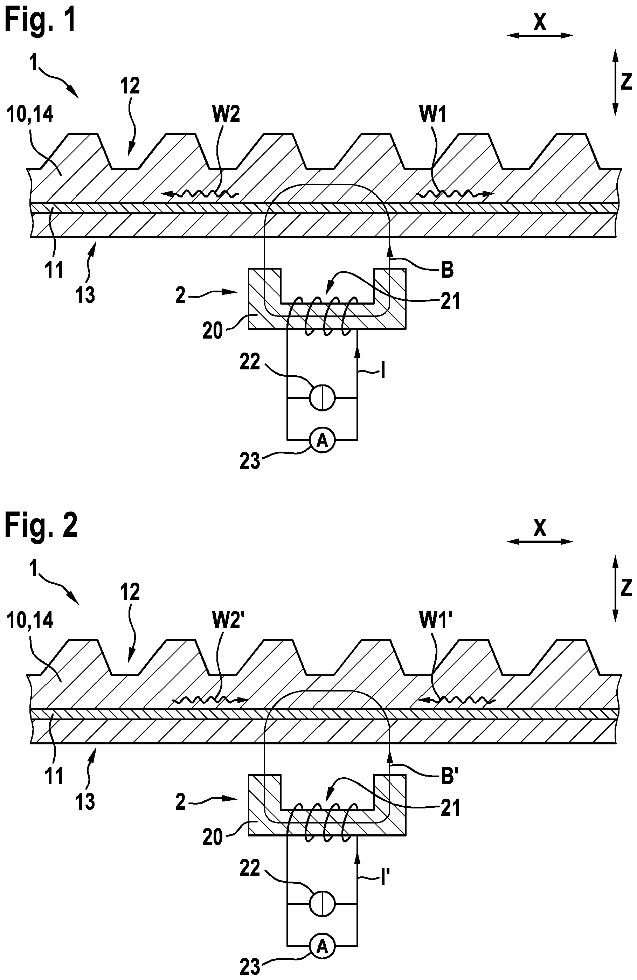

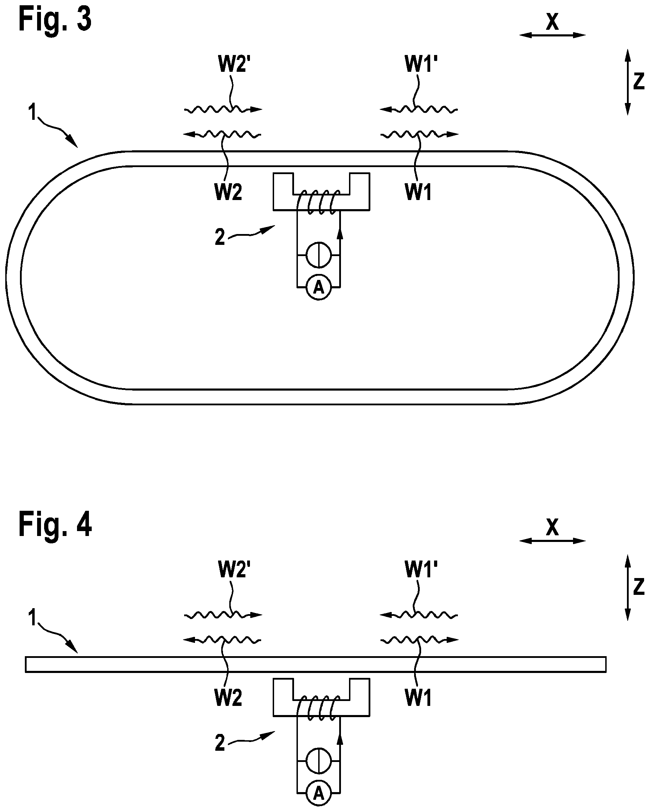

Fig. 1 zeigt einen schematischen Querschnitt durch einen Ausschnitt eines erfindungsgemäßen Systems gemäß eines ersten Ausführungsbeispiels beim Aussenden einer ersten ausgehenden Schallwelle W1. Fig. 2 zeigt die Darstellung der Fig. 1 beim Empfangen einer ersten eingehenden Schallwelle W1'. Fig. 3 zeigt eine schematische Darstellung des vollständigen erfindungsgemäßen Systems gemäß des ersten Ausführungsbeispiels.

Das erfindungsgemäße System gemäß dem ersten Ausführungsbeispiel der Fig. 1 bis 3 weist ein elastomeres Produkt 1 auf, welches in diesem Fall z.B. ein endlos geschlossener Antriebsriemen 1 sein kann. Das elastomere Produkt 1 besteht im Wesentlichen aus einem Produktkörper 10 als Riemenkörper 10 aus einem elastomeren Material. Entlang der länglichen endlos geschlossenen Erstreckungsrichtung des Riemenkörpers 10 sind mehrere parallel zueinander in derselben Ebene verlaufende Festigkeitsträger 11 z.B. in Form von Fasern wie insbesondere Glasfasern oder Corden wie insbesondere Aramidcorden in dem elastomeren Material eingebettet. Der Produktkörper 10 weist als Riemenkörper 10 eine Oberseite 12 in Form einer Profilierung 12 und gegenüberliegend eine Unterseite13 als Laufseite 13 auf. Dies ist bisher z.B. bei Antriebsriemen 1 bekannt.

Erfindungsgemäß ist der Produktkörper 10 als magnetostriktiver und insbesondere als ferromagnetischer Elastomerkörper 14 ausgebildet, dessen elastomeres Material mit magnetostriktiven bzw. ferromagnetischen Elemente, z.B. mit metallischen Partikeln, versetzt ist.

Erfindungsgemäß ist ferner ein elektromagnetisch-akustischer Wandler 2 zur Erzeugung von Schallwellen und insbesondere Ultraschallwellen unmittelbar neben dem elastomeren Produkt 1 jedoch in einem berührungslosen Abstand angeordnet. Der elektromagnetisch-akustische Wandler 2 weist einen U-förmigen Spulenkern 20 auf, dessen beiden offenen Enden senkrecht zur länglichen Erstreckung des Produktkörpers 10 und zu dessen Unterseite 13 hin ausgerichtet angeordnet sind. Der mittlere Bereich des Spulenkerns 20 wird von einer Induktionsspule 21 umgeben, welche von einer Stromquelle 22 mit einem elektrischen Wechselstrom I als elektrischer Erregerstrom I gespeist werden kann. Parallel zur Stromquelle 22 ist ein Strommesser 23 vorgesehen.

Mittels des elektromagnetisch-akustischen Wandlers 2 können die Festigkeitsträger 11 des elastomeren Produkts 1 erfindungsgemäß auf ihre Dehnung und bzw. oder auf ihren Zustand untersucht bzw. überwacht werden. Hierzu wird das elastomere Produkt 1 als Antriebsriemen 1 bestimmungsgemäß betrieben, so dass sich der Produktkörper 10 als Riemenkörper 10 in einer der beiden Richtungen bewegt.

Zu einem ersten Zeitpunkt wird für eine vorbestimmte Zeitdauer der elektrische Wechselstrom I an die Induktionsspule 21 des elektromagnetisch-akustischen Wandlers 2 angelegt und hierdurch ein entsprechender wechselnder magnetischer Erregerfluss B erzeugt, welcher sich von dem Spulenkern 20 über einen ersten Luftspalt in den Produktkörper 10 als magnetostriktiver Elastomerkörper 14 samt der dort eingebetteten Festigkeitsträger 11 und von dort über einen zweiten Luftspalt zurück in den Spulenkern 20 schließt.

Durch den magnetischen Erregerfluss B werden in dem Bereich des Produktkörpers 10 als magnetostriktiver Elastomerkörper 14, welcher von dem wechselnden magnetischen Erregerfluss B ausreichend erreicht werden kann, die Dipole des magnetostriktiven Materials entsprechend gleich ausgerichtet. Da der magnetische Erregerfluss B hierbei seine Richtung ändern, erfolgt eine entsprechende wechselnde Ausrichtung der Dipole, was zu einer Längenänderung des magnetostriktiver Elastomerkörpers 14 führt. Diese Längenänderungen verursachen Schwingungen, welche sich als Körperschallwellen in den übrigen Produktkörper 10 ausbreiten, jedoch aufgrund der Elastizität des magnetostriktiven Elastomerkörpers 14 dort schnell abklingen. Lediglich die Körperschallwellen, welche die Festigkeitsträger 11 erreichen, setzen sich entlang der Festigkeitsträger 11 in die eine Richtung als erste ausgehende Schallwelle W1 und in die andere entgegengesetzte Richtung als zweite ausgehende Schallwelle W2 fort, siehe z.B. Fig. 1, zur Verbesserung der Übersichtlichkeit neben dem Festigkeitsträger 11 dargestellt. Wird dabei die Frequenz des elektrischen Wechselstroms I als elektrischer Erregerstrom I ausreichend hoch gewählt, so werden hierdurch ausgehende Ultraschallwellen W1, W2 erzeugt.

Sind die beiden ausgehenden Schallwellen W1, W2 erzeugt und ausgesendet, so kann dies beendet und der elektrische Wechselstrom I als elektrischer Erregerstrom I eingestellt werden. Nun können sich die beiden ausgehenden Schallwellen W1, W2 entlang der Festigkeitsträger 11 ausbreiten, einander kreuzen und jeweils wieder in Richtung des gemeinsamen Ausgangspunkts zurücklaufen, siehe z.B. Fig. 3, zur Verbesserung der Übersichtlichkeit neben dem elastomeren Produkt 1 dargestellt.

Entsprechend wird der elektromagnetisch-akustische Wandler 2 nach dem Beenden des Bereitstellens des elektrischen Wechselstroms I als elektrischer Erregerstrom I in einen sensorischen Betriebszustand geschaltet, in welchem Veränderungen des Magnetfelds des magnetostriktiver Elastomerkörpers 14 als magnetischer Messfluss B' zu einem elektrischen Messstrom I' führen können, welcher mittels des Strommessers 23 des elektromagnetisch-akustischen Wandlers 2 erfasst werden kann. Treffen somit die zurücklaufenden beiden Schallwellen W1, W2 als erste eingehende Schallwelle W1' und als zweite eigehende Schallwelle W2' im Bereich des elektromagnetisch-akustischen Wandlers 2 ein, verändern die beiden eingehenden Schallwellen W1', W2' mittels Körperschall dort die Ausrichtung der Dipole des magnetostriktiver Elastomerkörpers 14 und führen hierdurch zu der o.g. Veränderung des Magnetfelds des magnetostriktiver Elastomerkörpers 14, welches über den magnetischen Messfluss B' als elektrischer Messstrom I' erfasst werden kann.

Zum einen kann aus der Laufzeit der beiden Schallwellen W1, W2, W1', W2' auf die Längen der Festigkeitsträger 11 und damit auch auf eine Veränderung der Längen der Festigkeitsträger 11 geschlossen werden. Hierdurch kann eine Dehnung erkannt bzw. als unzulässig hoch bewertet und hierauf z.B. durch eine Betriebsunterbrechung des Antriebsriemens 1 reagiert werden. Zum anderen kann aus dem Erfassen der beiden eingehenden Schallwellen W1', W2' wenigstens darauf geschlossen werden, dass die Festigkeitsträger 11 weiterhin endlos geschlossen, d.h. nicht durchtrennt, sind, da lediglich dann die beiden ausgehenden Schallwellen W1, W2 den elektromagnetisch-akustischen Wandler 2 als eingehende Schallwellen W1', W2' wieder erreichen können.

Aufgrund der berührungslosen Messtechnik des elektromagnetisch-akustischen Wandlers 2 kann dies bei sich bewegenden elastomeren Produkten 1 wie z.B. bei Antriebsriemen 1 erfolgen. Anstelle eines endlos geschlossenen Antriebsriemens 1 als elastomeres Produkt 1 kann ein derartiges erfindungsgemäßes System z.B. auch bei Fördergurten 1 oder bei Fahrzeugreifen 1 vergleichsweise umgesetzt werden.

Fig. 4 zeigt eine schematische Darstellung eines erfindungsgemäßen Systems gemäß eines zweiten Ausführungsbeispiels. In diesem Fall wird als elastomeres Produkt 1 ein Aufzugsriemen 1 betrachtet, welcher offen und nicht endlos geschlossen verwendet wird. Auch in diesem Fall kann der zuvor beschriebene elektromagnetisch-akustische Wandler 2 verwendet werden, wobei die beiden ausgehenden Schallwellen W1, W2 entlang der Festigkeitsträger 11 an den beiden offenen Enden des Aufzugsriemens 1 reflektiert und dann als eingehende Schallwellen W1', W2' wie zuvor beschrieben erfasst werden können. Dies ermöglichst die Umsetzung eines erfindungsgemäßen Systems bei derartigen elastomeren Produkten 1, zu denen z.B. auch Schläuche 1 gehören können.

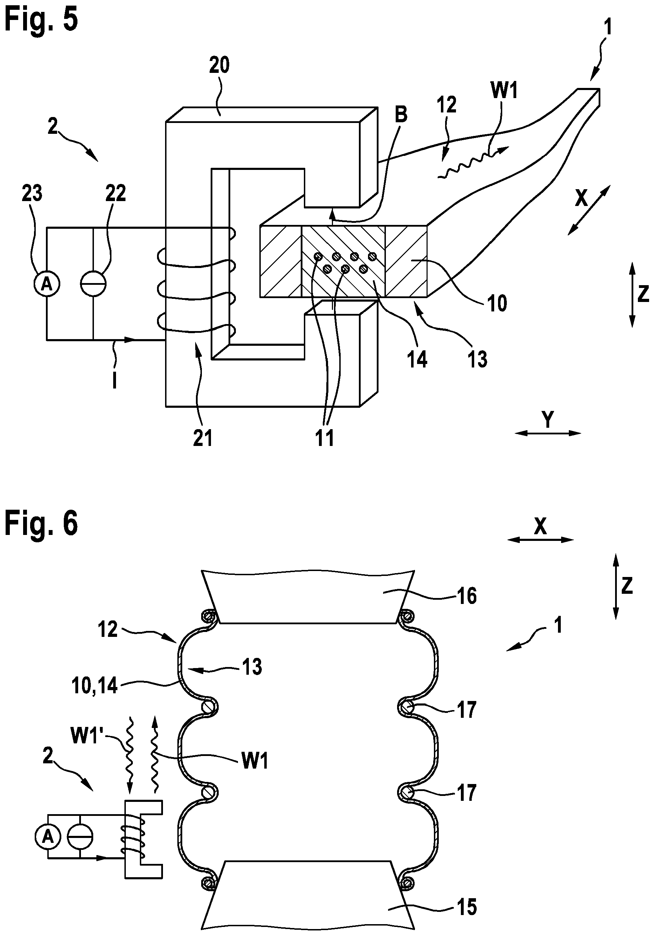

Fig. 5 zeigt eine schematische Darstellung eines erfindungsgemäßen Systems gemäß eines dritten Ausführungsbeispiels. Hierbei kann es sich als elastomeres Produkt 1 um einen Fördergurt 1 handeln, dessen Gurtkörper 10 in der vertikalen Richtung Z zwischen den offenen Enden des Spulenkerns 20 des elektromagnetisch-akustischen Wandlers 2 angeordnet ist. Beispielshaft sind die Festigkeitsträger 11 als Seile 11 bzw. als Stahlseile 11 in diesem Fall in der Breite Y des Fördergurtes 1 lediglich im mittleren Bereich des Gurtkörpers 10 angeordnet, so dass auch lediglich dieser Bereich als magnetostriktiver Elastomerkörper 14 ausgebildet ist und die beiden Seitenkanten frei von magnetostriktiven Elementen sein können. Dies kann die Herstellungskosten des Fördergurtes 1 reduzieren.

Fig. 6 zeigt eine schematische Darstellung eines erfindungsgemäßen Systems gemäß eines vierten Ausführungsbeispiels. In diesem Fall wird als elastomeres Produkt 1 eine Luftfeder 1 betrachtet, dessen Produktkörper 10 als Faltenbalg 10 zwischen einem Kolben 15 und einer Gleitplatte 16 bzw. einer Bördelplatte 16 angeordnet sowie in der Umfangsrichtung mit Metallringen 17 als Einschnürungselemente 17 umschlossen ist.

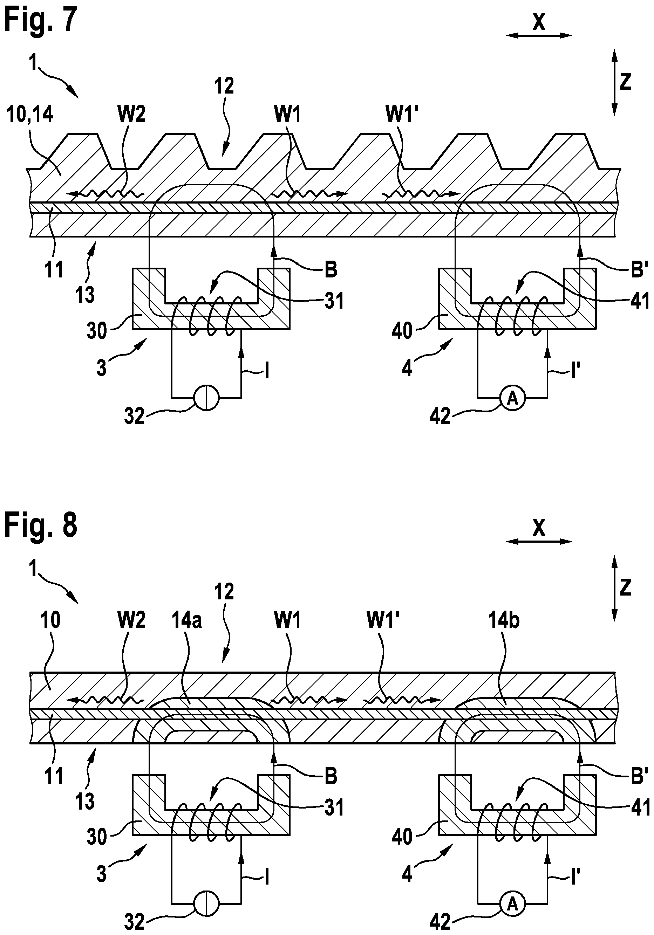

Fig. 7 zeigt einen schematischen Querschnitt durch einen Ausschnitt eines erfindungsgemäßen Systems gemäß eines fünften Ausführungsbeispiels. Auch in diesem Fall können als endlos geschlossene elastomere Produkte 1 z.B. Antriebsriemen 1, Aufzugsriemen 1, Fördergurte 1, Fahrzeugreifen 1 oder Schläuche 1 betrachtet werden.

Insbesondere für den Fall, dass die beiden ausgehenden Schallwellen W1, W2, z.B. aufgrund der großen Länge der Festigkeitsträger 11, nicht mit ausreichender Amplitude als eingehende Schallwellen W1', W2' die zuvor beschriebenen Funktionen ermöglichen können, kann anstelle des elektromagnetisch-akustischen Wandlers 2 an einer Position entlang der länglichen bzw. endlos geschlossenen Erstreckung des elastomeren Produkts 1 ein elektromagnetisch-akustischer (Ultra-)Erzeuger 3 mit Spulenkern 30, mit Induktionsspule 31 und mit Stromquelle 32 sowie hierzu entlang der länglichen bzw. endlos geschlossenen Erstreckung des elastomeren Produkts 1 versetzt angeordnet ein elektromagnetisch-akustischer (Ultra-)Empfänger 4 mit Spulenkern 40, mit Induktionsspule 41 und mit Strommesser 42 verwendet werden. Hierdurch kann vom elektromagnetisch-akustischen Erzeuger 3 zumindest die erste ausgehende Schallwelle W1 erzeugt und in einer gewissen Entfernung vom elektromagnetisch-akustischen Empfänger 4 als eingehende Schallwelle W1' erfasst werden. Hierdurch können die entsprechenden zuvor beschrieben Funktionen auf alternative Art und Weise umgesetzt werden.

Fig. 8 zeigt einen schematischen Querschnitt durch einen Ausschnitt eines erfindungsgemäßen Systems gemäß eines sechsten Ausführungsbeispiels. In diesem Fall werden zwei lokal und entlang der länglichen Erstreckung des elastomeren Produkts 1 wie z.B. eines Schlauches 1 zueinander beabstandet angeordnete einzelne magnetostriktive bzw. ferromagnetische Elastomerkörper 14a, 14b in das elastomere Material des Produktkörpers 10 eingebettet. Der elektromagnetisch-akustische Erzeuger 3 ist dem ersten magnetostriktiven bzw. ferromagnetischen Elastomerkörper 14a gegenüberliegend angeordnet. Der elektromagnetisch-akustische Empfänger 4 ist dem zweiten magnetostriktiven bzw. ferromagnetischen Elastomerkörper 14b gegenüberliegend angeordnet.

Auf diese Art und Weise kann ein erfindungsgemäßes System bei elastomeren Produkten 1 wie z.B. bei Schläuchen 1 angewendet werden, welche im bestimmungsgemäßen Gebrauch ihre Position gar nicht bzw. lediglich geringfügig verändern. Entsprechend kann darauf verzichtet werden, den Produktkörper 10 entlang seiner länglichen Erstreckungsrichtung zumindest abschnittsweise und ggfs. vollständig magnetostriktiv auszubilden, wodurch der Aufwand und die Kosten zur Umsetzung eines erfindungsgemäßen Systems geringgehalten werden können.

### Bezugszeichenliste

### (Teil der Beschreibung)

- B: magnetischer Erregerfluss
- B': magnetischer Messfluss
- I: elektrischer Wechselstrom; elektrischer Erregerstrom
- I': elektrischer Messstrom
- W1: erste ausgehende (Ultra-)Schallwelle
- W2: zweite ausgehende (Ultra-)Schallwelle
- W1': erste eingehende (Ultra-)Schallwelle
- W2': zweite eingehende (Ultra-)Schallwelle

- X: Längsrichtung; Tiefe
- Y: Querrichtung; Breite
- Z: vertikale Richtung; Höhe

- 1: elastomeres Produkt; Antriebsriemen; Aufzugsriemen; Fördergurt; Fahrzeugreifen; Luftfeder; Schlauch
- 10: Produktkörper; Riemenkörper; Gurtkörper; Reifenkörper; Faltenbalg; Schlauchwand
- 11: Festigkeitsträger; Seil; Stahlseil; Faser; Glasfaser Cord; Aramidcord
- 12: Oberseite; Außenseite; Profilierung
- 13: Unterseite; Innenseite; Laufseite
- 14: magnetostriktiver bzw. ferromagnetischer (Elastomer-)Körper
- 14a: erster magnetostriktiver bzw. ferromagnetischer (Elastomer-)Körper
- 14b: zweiter magnetostriktiver bzw. ferromagnetischer (Elastomer-)Körper
- 15: Kolben
- 16: Gleitplatte; Bördelplatte
- 17: Einschnürungselemente; Metallringe

- 2: elektromagnetisch-akustischer (Ultra-)Wandler
- 20: Spulenkern
- 21: Induktionsspule
- 22: Stromquelle
- 23: Strommesser

- 3: elektromagnetisch-akustischer (Ultra-)Erzeuger
- 30: Spulenkern
- 31: Induktionsspule
- 32: Stromquelle

- 4: elektromagnetisch-akustischer (Ultra-)Empfänger
- 40: Spulenkern
- 41: Induktionsspule
- 42: Strommesser

## Patentansprüche

1. System zur Dehnungserfassung und/oder Zustandsüberwachung eines Festigkeitsträgers (11) eines elastomeren Produkts (1)
mit dem elastomeren Produkt (1)
mit einem Produktkörper (10), welcher zumindest im Wesentlichen ein elastomeres Material aufweist,
**dadurch gekennzeichnet, dass** der Produktkörper (10) zumindest abschnittsweise wenigstens einen magnetostriktiven Körper (14), vorzugsweise einen ferromagnetischen Körper (14), aufweist, und
wobei der Produktkörper (10) zumindest abschnittsweise wenigstens einen Festigkeitsträger (11) aufweist, welcher in den Produktkörper (10) eingebettet ist,
mit einem elektromagnetisch-akustischen (Ultra-)Wandler (2), welcher zum elastomeren Produkt (1) beabstandet und ausreichend nah zum magnetostriktiven Körper (14) des Produktkörpers (10) angeordnet sowie ausgebildet ist,
mittels eines elektromagnetischen Wechselfelds den magnetostriktiven Körper (14) zum Aussenden wenigstens einer ersten ausgehenden Schallwelle (W1), vorzugsweise wenigstens einer ersten ausgehenden Ultraschallwelle (W1), anzuregen, welche sich über den magnetostriktiven Körper (14) des Produktkörpers (10) schließt, so dass die Dipole des magnetostriktiven Körpers (14) des Produktkörpers (10) abwechselnd in entgegengesetzte Richtungen ausgerichtet werden, und
wenigstens eine erste an dem magnetostriktiven Körper (14) eingehende Schallwelle (W1'), vorzugsweise eine erste an dem magnetostriktiven Körper (14) eingehende Ultraschallwelle (W1'), invers-magnetostriktiv zu erfassen,
wobei der Festigkeitsträger (11) zumindest abschnittweise ausreichend nah zum magnetostriktiven Körper (14) angeordnet ist, um die erste ausgehende Schallwelle (W1) vom magnetostriktiven Körper (14) zu empfangen und als erste eingehende Schallwelle (W1') zum magnetostriktiven Körper (14) zurückzusenden, und
wobei aus der ersten eingehenden Schallwelle (W1') eine Längenänderung des magnetostriktiven Körpers (14) des Produktkörpers (10) bestimmt werden kann.

2. System nach Anspruch 1, **dadurch gekennzeichnet, dass**
der elektromagnetisch-akustischen (Ultra-)Wandler (2) als stationäre Einrichtung oder als mobile Einrichtung ausgeführt ist.

3. System zur Dehnungserfassung und/oder Zustandsüberwachung eines Festigkeitsträgers (11) eines elastomeren Produkts (1)
mit dem elastomeren Produkt (1)
mit einem Produktkörper (10), welcher zumindest im Wesentlichen ein elastomeres Material aufweist,
**dadurch gekennzeichnet, dass** der Produktkörper (10) zumindest abschnittsweise wenigstens einen magnetostriktiven Körper (14), vorzugsweise einen ferromagnetischen Körper (14), aufweist, und
wobei der Produktkörper (10) zumindest abschnittsweise wenigstens einen Festigkeitsträger (11) aufweist, welcher in den Produktkörper (10) eingebettet ist,
mit einem elektromagnetisch-akustischen (Ultra-)Erzeuger (3), welcher zum elastomeren Produkt (1) beabstandet und ausreichend nah zum magnetostriktiven Körper (14) des Produktkörpers (10) angeordnet sowie ausgebildet ist, mittels eines elektromagnetischen Wechselfelds den magnetostriktiven Körper (14) zum Aussenden wenigstens einer ersten ausgehenden Schallwelle (W1), vorzugsweise wenigstens einer ersten ausgehenden Ultraschallwelle (W1), anzuregen, welche sich über den magnetostriktiven Körper (14) des Produktkörpers (10) schließt, so dass die Dipole des magnetostriktiven Körpers (14) des Produktkörpers (10) abwechselnd in entgegengesetzte Richtungen ausgerichtet werden, und
mit einem elektromagnetisch-akustischen (Ultra-)Empfänger (4), welcher zum elastomeren Produkt (1) beabstandet und ausreichend nah zum magnetostriktiven Körper (14) des Produktkörpers (10) angeordnet sowie ausgebildet ist, wenigstens eine erste an dem magnetostriktiven Körper (14) eingehende Schallwelle (W1'), vorzugsweise eine erste an dem magnetostriktiven Körper (14) eingehende Ultraschallwelle (W1'), invers-magnetostriktiv zu erfassen,
wobei der Festigkeitsträger (11) zumindest abschnittweise ausreichend nah zum magnetostriktiven Körper (14) angeordnet ist, um die erste ausgehende Schallwelle (W1) vom magnetostriktiven Körper (14) zu empfangen und als erste eingehende Schallwelle (W1') zum magnetostriktiven Elastomerkörper (14) zurückzusenden, wobei aus der ersten eingehenden Schallwelle (W1') eine Längenänderung des magnetostriktiven Körpers (14) des Produktkörpers (10) bestimmt werden kann.

4. System nach einem der vorangehenden Ansprüche, **dadurch gekennzeichnet, dass** der magnetostriktive Körper (14) zumindest abschnittsweise in berührendem Kontakt mit dem Festigkeitsträger (11) steht,
vorzugsweise der magnetostriktive Körper (14) den Festigkeitsträger (11) zumindest abschnittsweise, vorzugsweise senkrecht zu einer länglichen Erstreckungsrichtung des Festigkeitsträgers (11) vollständig, berührend umgibt.

5. System nach einem der vorangehenden Ansprüche, **dadurch gekennzeichnet, dass** der magnetostriktive Körper (14) ein magnetostriktiver Elastomerkörper (14) ist.

6. System nach einem der vorangehenden Ansprüche, **dadurch gekennzeichnet, dass** der Produktkörper (10) zumindest abschnittsweise, vorzugsweise vollständig, als magnetostriktiver Elastomerkörper (14) ausgebildet ist.

7. System zur Dehnungserfassung und/oder Zustandsüberwachung eines Festigkeitsträgers (11) eines elastomeren Produkts (1)
mit dem elastomeren Produkt (1)
mit einem Produktkörper (10), welcher zumindest im Wesentlichen ein elastomeres Material aufweist,
**dadurch gekennzeichnet, dass** der Produktkörper (10) wenigstens einen ersten magnetostriktiven Körper (14a), vorzugsweise einen ersten ferromagnetischen Körper (14a), und
hierzu beabstandet wenigstens einen zweiten magnetostriktiven Körper (14b), vorzugsweise einen zweiten ferromagnetischen Körper (14b, aufweist, und
wobei der Produktkörper (10) zumindest abschnittsweise wenigstens einen Festigkeitsträger (11) aufweist, welcher in den Produktkörper (10) eingebettet ist,
mit einem elektromagnetisch-akustischen (Ultra-)Erzeuger (3), welcher zum elastomeren Produkt (1) beabstandet und ausreichend nah zum ersten magnetostriktiven Körper (14a) des Produktkörpers (10) angeordnet sowie ausgebildet ist, mittels eines elektromagnetischen Wechselfelds den ersten magnetostriktiven Körper (14a) zum Aussenden wenigstens einer ersten ausgehenden Schallwelle (W1), vorzugsweise wenigstens einer ersten ausgehenden Ultraschallwelle (W1), anzuregen, welche sich über den magnetostriktiven Körper (14) des Produktkörpers (10) schließt, so dass die Dipole des magnetostriktiven Körpers (14) des Produktkörpers (10) abwechselnd in entgegengesetzte Richtungen ausgerichtet werden, und
mit einem elektromagnetisch-akustischen (Ultra-)Empfänger (4), welcher zum elastomeren Produkt (1) beabstandet und ausreichend nah zum zweiten magnetostriktiven Körper (14b) des Produktkörpers (10) angeordnet sowie ausgebildet ist, wenigstens eine erste an dem magnetostriktiven zweiten Körper (14b) eingehende Schallwelle (W1'), vorzugsweise eine erste an dem zweiten magnetostriktiven Körper (14b) eingehende Ultraschallwelle (W1'), invers-magnetostriktiv zu erfassen, wobei der Festigkeitsträger (11) zumindest abschnittweise ausreichend nah zum ersten magnetostriktiven Körper (14a) und zum zweiten magnetostriktiven Körper (14b) angeordnet ist, um die erste ausgehende Schallwelle (W1) vom ersten magnetostriktiven Körper (14a) zu empfangen und als erste eingehende Schallwelle (W1') zum zweiten magnetostriktiven Körper (14b) zu senden,
wobei aus der ersten eingehenden Schallwelle (W1') eine Längenänderung des magnetostriktiven Körpers (14) des Produktkörpers (10) bestimmt werden kann.

8. System nach einem der Ansprüche 3 bis 7, **dadurch gekennzeichnet, dass**
der elektromagnetisch-akustische (Ultra-)Erzeuger (3) und/oder der elektromagnetisch-akustische (Ultra-)Empfänger (4) als stationäre Einrichtung oder als mobile Einrichtung ausgeführt ist/sind.

9. System nach Anspruch 7 oder 8, **dadurch gekennzeichnet, dass**
der erste magnetostriktive Körper (14a) und der zweite magnetostriktive Körper (14b) jeweils zumindest abschnittsweise in berührendem Kontakt mit dem Festigkeitsträger (11) stehen,
vorzugsweise der erste magnetostriktive Körper (14a) und der zweite magnetostriktive Körper (14b) den Festigkeitsträger (11) jeweils zumindest abschnittsweise, vorzugsweise senkrecht zu einer länglichen Erstreckungsrichtung des Festigkeitsträgers (11) vollständig, berührend umgeben.

10. System nach einem der Ansprüche 7 bis 9, **dadurch gekennzeichnet, dass**
der erste magnetostriktive Körper (14a) ein erster magnetostriktiver Elastomerkörper (14a) und/oder der zweite magnetostriktive Körper (14b) ein zweiter magnetostriktiver Elastomerkörper (14b) ist.

11. System nach einem der vorangehenden Ansprüche, **dadurch gekennzeichnet, dass** der Festigkeitsträger (11) sich länglich erstreckend, vorzugsweise als Seil (11), als Faser (11) oder als Cord (11), ausgebildet ist.

12. System nach einem der Ansprüche 3 bis 10 und nach Anspruch 11, **dadurch gekennzeichnet, dass**
der elektromagnetisch-akustische (Ultra-)Erzeuger (3) und der elektromagnetisch-akustische (Ultra-)Empfänger (4) entlang der länglichen Erstreckungsrichtung des Festigkeitsträgers (11) zueinander beabstandet angeordnet sind.

13. System nach einem der vorangehenden Ansprüche, **dadurch gekennzeichnet, dass** das System, vorzugsweise eine Steuerungseinheit des Systems, dazu ausgebildet ist, basierend wenigstens auf einer Veränderung der Laufzeit zwischen dem Aussenden der ersten ausgehenden Schallwelle (W1) und dem Erfassen der ersten eingehenden Schallwelle (W1') eine Dehnung des Festigkeitsträgers (11) zu erkennen und/oder zu bestimmen.

14. System nach einem der vorangehenden Ansprüche, **dadurch gekennzeichnet, dass** das System, vorzugsweise eine Steuerungseinheit des Systems, dazu ausgebildet ist, basierend wenigstens auf der ersten eingehenden Schallwelle (W1') den Zustand des Festigkeitsträgers (11) zu bestimmen.

## Claims

1. System for detecting the strain and/or monitoring the condition of a reinforcing element (11) of an elastomeric product (1)
with the elastomeric product (1)
with a product body (10) which at least substantially comprises an elastomeric material,
**characterized in that**
the product body (10) has at least in some portions at least one magnetostrictive body (14), preferably a ferromagnetic body (14), and
wherein the product body (10) has at least in some portions at least one reinforcing element (11), which is embedded in the product body (10), with an electromagnetic-acoustic (ultra)transducer (2), which is arranged at a distance from the elastomeric product (1) and sufficiently close to the magnetostrictive body (14) of the product body (10) and is also designed
to excite the magnetostrictive body (14) by means of an electromagnetic alternating field to emit at least one first outgoing sound wave (W1), preferably at least one first outgoing ultrasound wave (W1), which completes a closed path through the magnetostrictive body (14) of the product body (10), so that the dipoles of the magnetostrictive body (14) of the product body (10) are aligned alternately in opposite directions, and
to detect inverse-magnetostrictively at least one first incoming sound wave (W1') at the magnetostrictive body (14), preferably a first incoming ultrasound wave (W1') at the magnetostrictive body (14), wherein the reinforcing element (11) is at least in some portions arranged sufficiently close to the magnetostrictive body (14) to receive the first outgoing sound wave (W1) from the magnetostrictive body (14) and return it as a first incoming sound wave (W1') to the magnetostrictive body (14), and
wherein a change in length of the magnetostrictive body (14) of the product body (10) can be determined from the first incoming sound wave (W1').

2. System according to Claim 1, **characterized in that**
the electromagnetic-acoustic (ultra)transducer (2) takes the form of a stationary device or a mobile device.

3. System for detecting the strain and/or monitoring the condition of a reinforcing element (11) of an elastomeric product (1)
with the elastomeric product (1)
with a product body (10) which at least substantially comprises an elastomeric material,
**characterized in that**
the product body (10) has at least in some portions at least one magnetostrictive body (14), preferably a ferromagnetic body (14), and
wherein the product body (10) has at least in some portions at least one reinforcing element (11), which is embedded in the product body (10), with an electromagnetic-acoustic (ultra)generator (3), which is arranged at a distance from the elastomeric product (1) and sufficiently close to the magnetostrictive body (14) of the product body (10) and is also designed to excite the magnetostrictive body (14) by means of an electromagnetic alternating field to emit at least one first outgoing sound wave (W1), preferably at least one first outgoing ultrasound wave (W1), which completes a closed path through the magnetostrictive body (14) of the product body (10), so that the dipoles of the magnetostrictive body (14) of the product body (10) are aligned alternately in opposite directions, and
with an electromagnetic-acoustic (ultra)receiver (4), which is arranged at a distance from the elastomeric product (1) and sufficiently close to the magnetostrictive body (14) of the product body (10) and is also designed to detect inverse-magnetostrictively at least one first incoming sound wave (W1') at the magnetostrictive body (14), preferably a first incoming ultrasound wave (W1') at the magnetostrictive body (14),
wherein the reinforcing element (11) is at least in some portions arranged sufficiently close to the magnetostrictive body (14) to receive the first outgoing sound wave (W1) from the magnetostrictive body (14) and return it as a first incoming sound wave (W1') to the magnetostrictive elastomer body (14), wherein a change in length of the magnetostrictive body (14) of the product body (10) can be determined from the first incoming sound wave (W1').

4. System according to one of the preceding claims, **characterized in that**
the magnetostrictive body (14) is at least in some portions in touching contact with the reinforcing element (11),
preferably the magnetostrictive body (14) surrounds the reinforcing element (11) in a touching manner at least in some portions, preferably completely when considered perpendicularly to a direction of longitudinal extent of the reinforcing element (11).

5. System according to one of the preceding claims, **characterized in that** the magnetostrictive body (14) is a magnetostrictive elastomer body (14).

6. System according to one of the preceding claims, **characterized in that** the product body (10) is formed at least in some portions, preferably completely, as a magnetostrictive elastomer body (14).

7. System for detecting the strain and/or monitoring the condition of a reinforcing element (11) of an elastomeric product (1)
with the elastomeric product (1)
with a product body (10) which at least substantially comprises an elastomeric material,
**characterized in that**
the product body (10) has at least one first magnetostrictive body (14a), preferably a first ferromagnetic body (14a), and at a distance from it at least one second magnetostrictive body (14b), preferably a second ferromagnetic body (14b), and wherein the product body (10) has at least in some portions at least one reinforcing element (11), which is embedded in the product body (10), with an electromagnetic-acoustic (ultra)generator (3), which is arranged at a distance from the elastomeric product (1) and sufficiently close to the first magnetostrictive body (14a) of the product body (10) and is also designed to excite the first magnetostrictive body (14a) by means of an electromagnetic alternating field to emit at least one first outgoing sound wave (W1), preferably at least one first outgoing ultrasound wave (W1), which completes a closed path through the magnetostrictive body (14) of the product body (10), so that the dipoles of the magnetostrictive body (14) of the product body (10) are aligned alternately in opposite directions, and
with an electromagnetic-acoustic (ultra)receiver (4), which is arranged at a distance from the elastomeric product (1) and sufficiently close to the second magnetostrictive body (14b) of the product body (10) and is also designed to detect inverse-magnetostrictively at least one first incoming sound wave (W1') at the second magnetostrictive body (14b), preferably a first incoming ultrasound wave (W1') at the second magnetostrictive body (14b), wherein the reinforcing element (11) is at least in some portions arranged sufficiently close to the first magnetostrictive body (14a) and the second magnetostrictive body (14b) to receive the first outgoing sound wave (W1) from the magnetostrictive body (14a) and send it as a first incoming sound wave (W1') to the second magnetostrictive body (14b),
wherein a change in length of the magnetostrictive body (14) of the product body (10) can be determined from the first incoming sound wave (W1').

8. System according to one of Claims 3 to 7, **characterized in that**
the electromagnetic-acoustic (ultra)generator (3) and/or the electromagnetic-acoustic (ultra)receiver (4) take(s) the form of a stationary device or a mobile device.

9. System according to Claim 7 or 8, **characterized in that**
the first magnetostrictive body (14a) and the second magnetostrictive body (14b) are each at least in some portions in touching contact with the reinforcing element (11),
preferably the first magnetostrictive body (14a) and the second magnetostrictive body (14b) each surround the reinforcing element (11) in a touching manner at least in some portions, preferably completely when considered perpendicularly to a direction of longitudinal extent of the reinforcing element (11).

10. System according to one of Claims 7 to 9, **characterized in that**
the first magnetostrictive body (14a) is a first magnetostrictive elastomer body (14a) and/or the second magnetostrictive body (14b) is a second magnetostrictive elastomer body (14b).

11. System according to one of the preceding claims, **characterized in that** the reinforcing element (11) is formed in a longitudinally extending manner, preferably as a rope (11), as a fibre (11) or as a cord (11).

12. System according to one of Claims 3 to 10 and according to Claim 11, **characterized in that**
the electromagnetic-acoustic (ultra)generator (3) and the electromagnetic-acoustic (ultra)receiver (4) are arranged at a distance from one another along the direction of longitudinal extent of the reinforcing element (11).

13. System according to one of the preceding claims, **characterized in that**
the system, preferably a control unit of the system, is designed to detect and/or determine a strain of the reinforcing element (11) on the basis at least of a change in the transit time between the sending of the first outgoing sound wave (W1) and the detecting of the first incoming sound wave (W1').

14. System according to one of the preceding claims, **characterized in that** the system, preferably a control unit of the system, is designed to determine the condition of the reinforcing element (11) on the basis at least of the first incoming sound wave (W1').

## Revendications

1. Système de détection de la déformation et/ou de surveillance de l'état d'un support de renforcement (11) d'un produit élastomère (1),
comprenant le produit élastomère (1)
ayant un corps de produit (10) qui présente au moins essentiellement un matériau élastomère,
**caractérisé en ce que**
le corps de produit (10) comprend au moins par endroits au moins un corps magnétostrictif (14), de préférence un corps ferromagnétique (14), et
le corps de produit (10) comprend au moins par endroits au moins un support de renforcement (11) qui est intégré dans le corps de produit (10), avec un (ultra-)transducteur électromagnétique-acoustique (2), qui est agencé à distance du produit élastomère (1) et suffisamment près du corps magnétostrictif (14) du corps de produit (10), et qui est conçu de manière à
exciter le corps magnétostrictif (14) au moyen d'un champ électromagnétique alternatif afin d'émettre au moins une première onde sonore sortante (W1), de préférence au moins une première onde ultrasonore sortante (W1), qui se ferme sur le corps magnétostrictif (14) du corps de produit (10), de sorte que les dipôles du corps magnétostrictif (14) du corps de produit (10) soient orientés alternativement dans des directions opposées, et
détecter par magnétostriction inverse au moins une première onde sonore (W1') entrant dans le corps magnétostrictif (14), de préférence une première onde ultrasonore (W1') entrant dans le corps magnétostrictif (14), le support de renforcement (11) étant agencé au moins par sections suffisamment près du corps magnétostrictif (14) pour recevoir la première onde sonore émise (W1) par le corps magnétostrictif (14) et la renvoyer au corps magnétostrictif (14) sous la forme de la première onde sonore entrante (W1'), et
un changement de longueur du corps magnétostrictif (14) du corps de produit (10) étant apte à être déterminé à partir de la première onde sonore entrante (W1').

2. Système selon la revendication 1, **caractérisé en ce que**
le (ultra-)transducteur électromagnétique-acoustique (2) est conçu sous la forme d'un dispositif fixe ou d'un dispositif mobile.

3. Système de détection de la déformation et/ou de surveillance de l'état d'un support de renforcement (11) d'un produit élastomère (1),
comprenant le produit élastomère (1)
ayant un corps de produit (10) qui présente au moins essentiellement un matériau élastomère,
**caractérisé en ce que**
le corps de produit (10) comprend au moins par endroits au moins un corps magnétostrictif (14), de préférence un corps ferromagnétique (14), et
le corps de produit (10) comprend au moins par endroits au moins un support de renforcement (11) qui est intégré dans le corps de produit (10) avec un (ultra-)générateur électromagnétique-acoustique (3), qui est agencé à distance du produit élastomère (1) et suffisamment près du corps magnétostrictif (14) du corps de produit (10) et qui est conçu de façon à, au moyen d'un champ électromagnétique alternatif, exciter le corps magnétostrictif (14) afin d'émettre au moins une première onde sonore sortante (W1), de préférence au moins une première onde ultrasonore sortante (W1), qui se ferme sur le corps magnétostrictif (14) du corps de produit (10), de sorte que les dipôles du corps magnétostrictif (14) du corps de produit (10) soient orientés alternativement dans des directions opposées, et
avec un (ultra-)récepteur électromagnétique-acoustique (4), qui est espacé du produit élastomère (1) et agencé suffisamment près du corps magnétostrictif (14) du corps de produit (10) et qui est conçu de façon à détecter de manière magnétostrictive inverse au moins une première onde sonore (W1') entrant dans le corps magnétostrictif (14), de préférence une première onde ultrasonore (W1') entrant dans le corps magnétostrictif (14),
le support de renforcement (11) étant agencé, au moins par sections, suffisamment près du corps magnétostrictif (14) pour recevoir la première onde sonore émise (W1) par le corps magnétostrictif (14) et la renvoyer au corps élastomère magnétostrictif (14) en tant que première onde sonore entrante (W1'), la première onde sonore entrante (W1') permettant de déterminer une variation de longueur du corps magnétostrictif (14) du corps de produit (10).

4. Système selon l'une des revendications précédentes, **caractérisé en ce que** le corps magnétostrictif (14) est au moins partiellement en contact avec le support de renforcement (11),
de préférence, le corps magnétostrictif (14) entoure complètement le support de renforcement (11) en le touchant, au moins par sections, de préférence perpendiculairement à une direction d'extension longitudinale du support de renforcement (11).

5. Système selon l'une des revendications précédentes, **caractérisé en ce que** le corps magnétostrictif (14) est un corps élastomère magnétostrictif (14).

6. Système selon l'une des revendications précédentes, **caractérisé en ce que** le corps de produit (10) est réalisé au moins par sections, de préférence entièrement, sous la forme d'un corps élastomère magnétostrictif (14).

7. Système de détection de la déformation et/ou de surveillance de l'état d'un support de renforcement (11) d'un produit élastomère (1),
comprenant le produit élastomère (1)
ayant un corps de produit (10) qui présente au moins essentiellement un matériau élastomère,
**caractérisé en ce que**
le corps de produit (10) présente au moins un premier corps magnétostrictif (14a), de préférence un premier corps ferromagnétique (14a), et, à distance de celui-ci, au moins un deuxième corps magnétostrictif (14b), de préférence un deuxième corps ferromagnétique (14b), et le corps de produit (10) comprend au moins par endroits au moins un support de renforcement (11), lequel est intégré dans le corps de produit (10) avec un (ultra-)générateur électromagnétique-acoustique (3), qui est agencé à distance du produit élastomère (1) et suffisamment près du premier corps magnétostrictif (14a) du corps de produit (10) et qui est conçu de manière à exciter le premier corps magnétostrictif (14a) au moyen d'un champ électromagnétique alternatif afin d'émettre au moins une première onde sonore sortante (W1), de préférence au moins une première onde ultrasonore sortante (W1), qui se referme sur le corps magnétostrictif (14) du corps de produit (10), de sorte que les dipôles du corps magnétostrictif (14) du corps de produit (10) soient orientés alternativement dans des directions opposées, et
avec un (ultra-)récepteur électromagnétique-acoustique (4), qui est espacé du produit élastomère (1) et agencé suffisamment près du deuxième corps magnétostrictif (14b) du corps de produit (10) et qui est conçu de façon à détecter de manière magnétostrictive inverse au moins une première onde sonore (W1') entrant sur le deuxième corps magnétostrictif (14b), de préférence une première onde ultrasonore (W1') entrant dans le deuxième corps magnétostrictif (14b), le support de renforcement (11) étant agencé, au moins par sections, suffisamment près du premier corps magnétostrictif (14a) et du deuxième corps magnétostrictif (14b) afin de recevoir la première onde sonore sortante (W1) du premier corps magnétostrictif (14a) et de l'envoyer au deuxième corps magnétostrictif (14b) en tant que première onde sonore entrante (W1'),
un changement de longueur du corps magnétostrictif (14) du corps de produit (10) étant apte à être déterminé à partir de la première onde sonore entrante (W1').

8. Système selon l'une des revendications 3 à 7, **caractérisé en ce que** le (ultra-)générateur électromagnétique-acoustique (3) et/ou le (ultra-)récepteur électromagnétique-acoustique (4) est/sont conçu(s) en tant que dispositif fixe ou que dispositif mobile.

9. Système selon la revendication 7 ou la revendication 8, **caractérisé en ce que**
le premier corps magnétostrictif (14a) et le deuxième corps magnétostrictif (14b) sont chacun au moins partiellement en contact avec le support de renforcement (11),
de préférence, le premier corps magnétostrictif (14a) et le deuxième corps magnétostrictif (14b) entourent au moins partiellement le support de renforcement (11) en le touchant complètement, de préférence perpendiculairement à une direction d'extension longitudinale du support de renforcement (11).

10. Système selon l'une des revendications 7 à 9, **caractérisé en ce que** le premier corps magnétostrictif (14a) est un premier corps élastomère magnétostrictif (14a) et/ou le deuxième corps magnétostrictif (14b) est un deuxième corps élastomère magnétostrictif (14b).

11. Système selon l'une des revendications précédentes, **caractérisé en ce que** le support de renforcement (11) est de forme allongée, de préférence sous forme de câble (11), de fibre (11) ou de cordon (11).

12. Système selon l'une des revendications 3 à 10 et selon la revendication 11, **caractérisé en ce que**
le (ultra-)générateur (3) électromagnétique-acoustique et le (ultra-)récepteur (4) électromagnétique-acoustique sont agencés à distance l'un de l'autre dans le sens longitudinal du support de renforcement (11).

13. Système selon l'une des revendications précédentes, **caractérisé en ce que** le système, de préférence une unité de commande du système, est conçu de façon à détecter et/ou déterminer une déformation du support de renforcement (11) sur la base d'au moins une variation du temps de propagation entre l'émission de la première onde sonore sortante (W1) et la détection de la première onde sonore entrante (W1').

14. Système selon l'une des revendications précédentes, **caractérisé en ce que** le système, de préférence une unité de commande du système, est conçu de façon à déterminer l'état du support de renforcement (11) sur la base d'au moins la première onde sonore entrante (W1').
